Europäisches Patentamt

European Patent Office

Office européen des brevets

(19)

(11) Publication number: **0 137 852**
**A1**

## EUROPEAN PATENT APPLICATION

published in accordance with Art. 158(3) EPC

(12)

(21) Application number: 84900871.9

(22) Date of filing: 16.02.84

Data of the international appli-
cation taken as a basis:

(86) International application number:
**PCT/JP 84/00048**

(87) International publication number:
**WO 84/03367 (30.08.84 84/21)**

(51) Int. Cl.⁴: **G 05 B 19/02**

(30) Priority: 18.02.83 JP 25906/83

(71) Applicant: **FANUC LTD, 5-1, Asahigaoka 3-chome
Hino-shi, Tokyo 191 (JP)**

(72) Inventor: **NAGAMINE, Tsuyoshi, 7-11-9, Owada-cho,
Hachioji-shi Tokyo 192 (JP)**
Inventor: **INOUE, Tsuyoshi,
Toyoda-Corporasu 313 3-15-1, Higashi Toyoda, Hino-shi
Tokyo 191 (JP)**
Inventor: **TORIYAMA, Syuji, Midori-Sou, 8-5-8,
Fukazawa, Setagaya-ku Tokyo 158 (JP)**

(43) Date of publication of application: 24.04.85
Bulletin 85/17

(74) Representative: **Billington, Lawrence Emlyn et al,
HASELTINE LAKE & CO Hazlitt House 28 Southampton
Buildings Chancery Lane, London WC2A 1AT (GB)**

(84) Designated Contracting States: **DE FR GB**

(54) **NUMERICAL CONTROL SYSTEM.**

(57) A numerical control system numerically controlls a
mechanism (3), such as a machine tool, by means of a
numerical control apparatus (1) and a programmable con-
troller (2). In order to enable alteration of control data for the
numerical control apparatus (1), which has been prepared
in accordance with basic specifications thereof from the
programmable controller (2), so that the functions of the
system can be easily improved to match the mechanism (3),
the system is arranged so that a processor (202e) in the
programmable controller (2) can directly access a memory
(101b) in the numerical control apparatus (1) by an address
data bus (202g) of the programmable controller (2) connect-
ed to the memory (101b) in the numerical control apparatus
(1).

- 1 -

S P E C I F I C A T I O N

NUMERICAL CONTROL SYSTEM

Technical Field

The present invention relates to a numerical control system for numerically controlling a machine such as a machine tool with a numerical control apparatus and a programmable controller, and more particularly to a numerical control system in which machine control functions can easily be improved.

Background Art

Numerical control systems control various machine elements in a machine tool based on commands from a numerical control apparatus (including an operator console). In such a numerical control system, there is an electrical control circuit composed of a number of relays and interposed between the numerical control apparatus (hereinafter referred to as an "NC apparatus") and the machine. Certain relays in the electrical control circuit are actuated by NC commands (such as M function commands, S function commands, or commands from the operator console) for enabling machine elements to perform operations dependent on the given NC commands.

With the conventional system, however, the electrical control circuit includes many relays which make the apparatus large in size and costly, and relay malfunctions have led to lowered reliability.

To avoid the above problems, recent numerical control systems mostly employ a sequence controller (programmable sequence controller) which is programmed to perform the functions of the electrical control circuit.

In the programmable controller, a sequence program is stored in a memory and executed by a processor for the sequence-control of a machine. Control signals are transmitted and receieved between the programmable controller and the NC apparatus through a DI/DO circuit, and the programmable controller effects sequence control based on NC commands from the NC apparatus. Therefore, only control signals are transmitted and received between the programmable controller and the NC apparatus. The NC apparatus cannot directly supervise data in the programmable controller, and the programmable controller cannot directly get data from the NC apparatus.

The numerical control system has therefore been disadvantageous in that it fails to meet a demand for fine control which is suited to a machine connected to the NC apparatus and the programmable controller. For example, a control program for the NC apparatus is complex and large in capacity since the NC apparatus controls the programmable controller and the machine tool. However, since the programmable controller may effect only the sequence control of the machine, a control program for the programmable controller is simple and small in capacity. As a consequence, the programmable controller can easily be produced by machine makers or users. When changing control data on basic specifications of the NC apparatus for the control suited to machine characteristics, it would be easy and no control program for the NC apparatus would have to be changed if the control data could be changed from the side of the programmable controller. The functions would easily be improved to meet the machine characteristics if the functions could be improved by the control program for the programmable controller.

However, with the prior system in which only control signals are transmitted and received between the NC apparauts and the programmable controller, it would be difficult to change the control data on the basic specifications of the NC apparatus from the programmable controller, and it would also be difficult to effect control in a manner to improve the functions to meet machine characteristics through the programmable controller.

Accordingly, it is an object of the present invention to provide a numerical control system in which control data based on basic specifications of an NC apparatus can be changed from a programmable controller for

0137852

- 4 -

thereby easily improving functions to meet a machine to be controlled.

Disclosure of the Invention

A numerical control apparatus according to the present invention comprises a numerical control apparatus having at least a processor and a memory for carrying out numerical control of a machine based on a machining program, and a programmable controller having at least a processor and a memory for carrying out sequence control of the machine according to control signals from the numerical control apparatus, the memory of the numerical control apparatus being connected to a data bus of the programmable controller for allowing the programmable controller to have direct access to the memory of the numerical control apparatus. Since the memory required for processing by the processor of the numerical control apparatus is accessible by the programmable controller in the numerical control system, the programmable controller can effect processing for improving functions by utilizing data of the numerical control apparatus, and data of the programmable controller can be processed by utilizing functions of the numerical control apparatus. Therefore, the numerical control system of the present invention can change control data on basic specifications of the numerical control apparatus through the programmable controller to improve the functions to meet machine characteristics, and the functions suited to the machine characteristics can be improved by changing a control program for the programmable controller. Such function improvement can be effected with ease and by a machine maker or a user to suit the machine. Stated otherwise, a maker of numerical control apparatus may only supply numerical control apparatus of the same specifications in accordance with the present invention, contributing to a reduction in the cost of numerical control apparatus.

### Brief Description of the Drawings

Fig. 1 is a block diagram of a numerical control system according to an embodiment of the present invention;

Fig. 2 is a ladder diagram for sequence control used in Fig. 1;

Fig. 3 is a diagram of a sequence program for the ladder diagram of Fig. 2;

Fig. 4 is a diagram of a transmitter and receiver section in the block diagram of Fig. 1;

Fig. 5 is a digram of a display unit in the block diagram of Fig. 1;

Fig. 6 is a diagram of ladder symbols explanatory of Fig. 5;

Fig. 7 is a diagram showing an example of a ladder diagram on the arrangement of Fig. 5; and

- 6 -

Fig. 8 is a diagram showing another example of a ladder diagram on the arrangement of Fig. 5.

Best Mode for Carrying Out the Invention

The present invention will be described in greater detail with reference to the accompanying drawings.

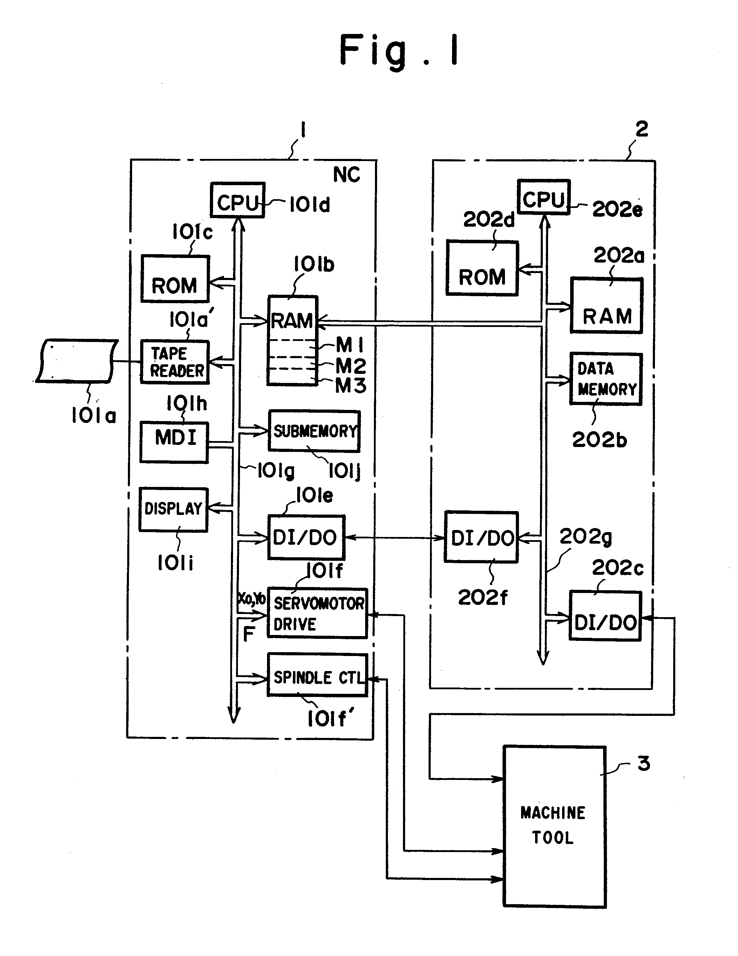

Fig. 1 is a block diagram of a numerical control system according to an embodiment of the present invention.

Designated at 1 is an NC apparatus, 2 a programmable controller (hereinafter referred to as a "PC apparatus") separate from the NC apparatus, and 3 a machine tool.

The NC apparatus 1 includes a paper tape 101a punched with machining commands, a tape reader 101a' for reading the paper tape, and a random-access memory (RAM) for storing the results of processing by a processor, described later, and machining commands punched in the machining tape, the random-access memory having a display region for a display, described later. The NC apparatus 1 also has a read-only memory (ROM) for storing a basic control program for controlling the NC apparatus 1, a processor (CPU) 101d for effecting processing according to commands of the machining command program and the basic control program, and an input/output circuit (DI/DO circuit) for transmitting and receiving control signals between the sequence controller 2 and the NC apparatus 1. A servomotor drive circuit 101f serves to drive a

- 7 -

servomotor for driving a table in a machine tool 3, and includes a pulse distribution computing circuit supplied with intervals of movement Xo, Yo in the directions of X- and Y-axes and a feed speed F for effecting a known pulse distribution computation to issue distributed pulses X, Y. A spindle motor control circuit 101f controls the driving of a spindle motor in the machine tool 3. Designated at 101g is an address data bus. A manual data input (MDI) unit 101h is mounted on an operator console in the NC apparatus 1 and used for entering 1-block machining command data in adding and changing machining command data. A universal display unit 101i serves to display a current position and the like of a tool and the like. The display unit 101i and the manual data input (MDI) unit 101h may be integrally constructed together. A submemory 101j is composed of a bubble memory, or a C-MOS memory for storing a control program for grinding, drilling and other machining operations inherent in the machine. The above components are interconnected by the address data bus 101g.

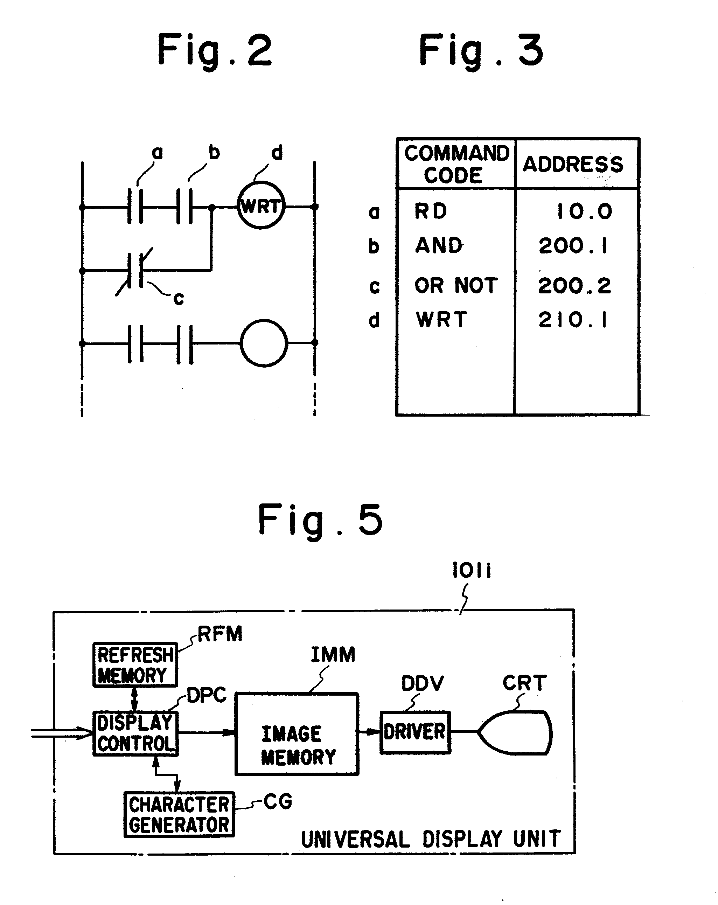

The PC apparatus 2 includes a random-access memory (RAM) 202a for storing a sequence program in which the functions of an electrical control circuit are theoretically programmed with command codes. For example, a ladder diagram which is part of the electrical control circuit showin FIG. 2 is programmed as illustrated in FIG.

3.  Denoted at RD, AND, WRT, OR NOT in the sequence program are command codes, RD being a readout command, AND an ANDing command, WRT a write command, OR an ORing command, and NOT a NOTing command. 10.0, 200.1, ... are indicative of address (representing a certain address and a certain bit, 10.0 for example indicating the 0th bit in the 10th address in a memory) bits on a data memory for effecting the command codes. By executing commands in the sequence program, the logic computation:

$$(a \cdot b) + c$$

is effected, and the result ("1" or "0") is stored in the 1st bit in the 210th address in the data memory. The data memory, indicated 202b, stores ON/OFF conditions of relays in the electrical control circuit of FIG. 2 as "1" and "0", each relay corresponding to one bit. When an automatic mode is issued from the operator console of the NC apparatus, the relay a (AUT) in the electrical control circuit is turned on, and the PC apparatus 2 stores "1" in the 0th bit in the 10th address in the data memory 202b. The PC apparatus further includes a data input/output unit 202c for transmitting and receiving data between the PC apparatus 2 and the machine tool 3, a ROM 202d for storing a control program for controlling the PC apparatus 2 proper, a processor (CPU) 202e for effecting prescribed sequence processing according to the control program and the sequence program, an input/output circuit 202f for transmitting and receiving control signals between the PC apparatus 2 and the NC apparatus 1, and an addresss data bus 202g.

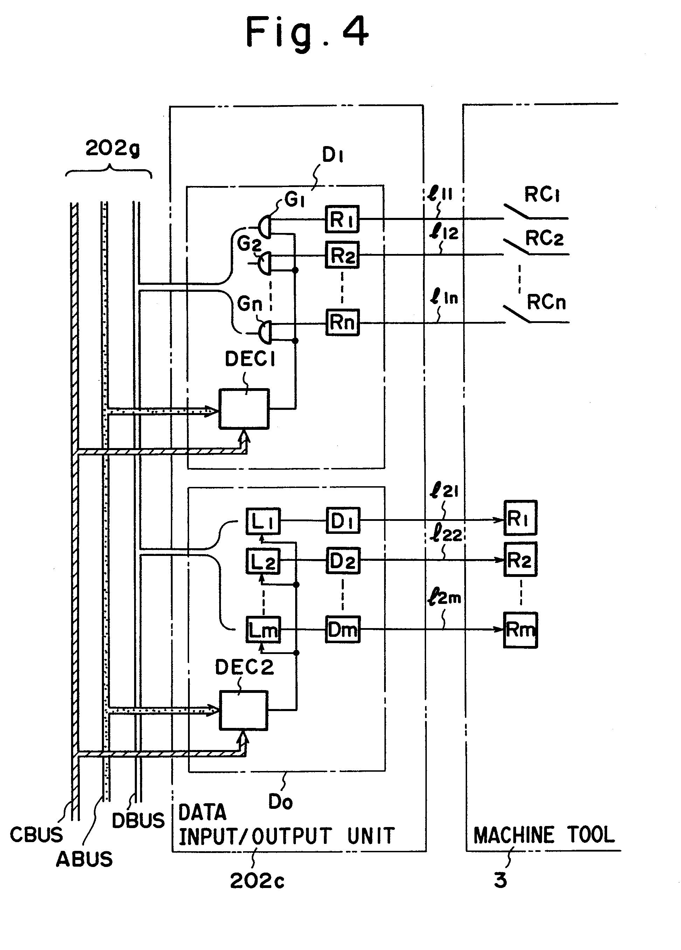

FIG. 4 is a detailed diagram of the data input/output unit 202c. The data input/output unit 202c has receivers R1 - Rn for receiving signals from various limit switches and relay contacts RC1 - RCn in the machine tool 3, AND gates G1 - Gn, and a decoder DEC1 for decoding address signals from an address bus ABUS, opening certain AND gates, and delivering AND gate outputs to a data bus DBUS.

A data input/output circuit DO in the data input/ output unit 202c includes flip-flops (or latches) L1 - Lm for storing spindle normal and reverse rotation signals to be issued to the machine tool 3, drivers D1 - Dm associated respectively with the flip-flops (hereinafter referred to as "FF") L1 - Lm for delivering output signals from the FFs to the machine tool 3, and a decoder DEC2 for decoding address signals on the addresss bus ABUS to set/reset certain FFs and for storing data on the data bus DBUS in certain FFs. Designated at CPU is a control signal bus for transmitting and receiving control signals, ABUS the address bus, DBUS the data bus, $\ell 11 - \ell 1n$ and $\ell 21 - \ell 2m$ cables connecting between the data input/output unit 202c and the machine 3 for transmission and reception of data therebetween.

Operation of the system shown in FIG. 1 will now be described. In the NC apparatus 1, the necessary machine control program is loaded from the submemory 101j into a first program region M1 in the RAM 101b when a power supply is switched on. The machining program on the paper tape 101a is loaded through the tape reader 101a' into a second program region M2 in the RAM 101b. The CPU 101d executes the machining program in the RAM 101b based on the basic control program in the ROM 101c and the machine control program in the RAM 101b, and delivers movement commands through the address data bus 101g to the servomotor drive circuit 101f and the spindle motor control circuit 101f' for numerically controlling the motors in the machine tool 3. The CPU 101d also delivers control commands through the address data bus 101g to the input/output circuit 101e from which the control commands are delivered to the PC apparatus 2. The PC apparatus 2 enters a sequence control operation based on the control commands from the NC apparatus 1.

In the PC apparatus 2, the previously prepared sequence program is stored in the RAM 202a, and hence the CPU 202e successively reads the commnads of the sequence prrogram one by one from the RAM 202a under the control of the control program in the ROM 202a, effects a sequence process from the first command to the final sequence program command, returns to the first sequence program command upon completion of the final command processing, and thereafter cyclically repeats the sequence program commands.

If a spindle normal rotation command M03, for exampe, is issued from the NC apparatus 1, then the PC apparatus 2 stores "1" at corresponding bits in addresses in the data memory 202b where M functions MF and M code signals Mll, Ml2 are to be stored.

Based on the stored content, the CPU 202e delivers a command through the address data bus 202g to the data input/output unit 202c. For example, "1" is stored in the FF Ll in the data input/output circuit DO (FIG. 4), and issued through the driver Dl and the cable ℓ21 to the machine tool 3. The relay Rl in the machine tool 3 is now turned on to effect spindle normal rotation control. When the spindle is rotated in a normal direction, the relay contact RCl is turend on, and a spindle normal rotation completion signal is stored through the cable ℓll, the receiver Rl, the AND gate Gl, and the data bus DBUS in the address data bus 202g into a prescribed bit in the data memory 202b (FIG. 1). Thereafter, the PC apparatus 2 continues the sequence program processing, and notifies the NC apparatus 1 of the completion of spindle normal rotation, whereupon the sequence processing for the spindle normal rotation is brought to an end.

The RAM 202c may be composed of a ROM (read-only memory) for storing the sequence program.

The RAM 101b in the NC apparatus 1 stores, in addition to the machine control program and the machining command program stored respectively in the program regions M1, M2, display data for the universal display unit 101i in a display region M3 to diplay display data from the CPU 101d on the universal display unit 101i. The display data is used for displaying a block, currently being executed, of the CPU 101d, a current position of the machine tool 3, corrected data entered through the MDI 101h, the machining command program, and an alarm. The other regions in the RAM 101b are used as work areas for temporarily storing the results (such for example as the content of the block being executed and the current position of the machine tool) of processing by the CPU 101d and the conditions (such for example as the loads of the servomotor and the spindle motor) of the machine tool 3 as detected by the CPU 101d.

According to the present invention, the address data bus 202g of the PC apparatus 2 is connected to the RAm 101b of the NC apparatus 1 for allowing the CPU 202e of the PC apparatus 2 to directly access the RAM 101b of the NC

- 13 -

apparatus 1.  Therefore, data transmission and reception is made possible between the NC apparatus 1 and the PC apparatus 2.  Such an arrangement can improve various functions as follows:

(1) Improvement of the display function:

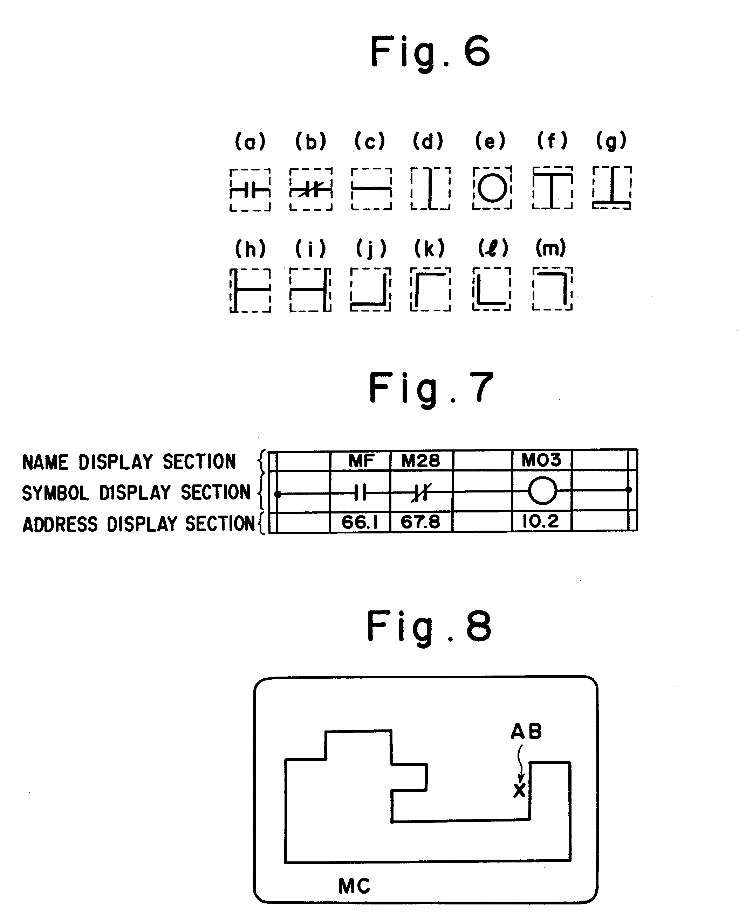

There is an instance wherein the operator wants to see the sequence program for the PC apparatus 1 upon maintenance or alarm.  It is convenient if the sequence program could be displayed as a ladder diagram and on the display unti 101i in the NC apparatus 1.  In the numerical control system of the invention, the CPU 202e in the PC apparatus 2 writes the sequence program in the RAM 202a into the display region M3 in the RAm 101b in the NC apparatus 1 through the address data bus 202g in response to a display command from the MDI 101h in the NC apparatus 1.  The ladder diagram of FIG. 2 can now be displayed on the display unit 101i in the NC apparatus 1.  This operation will be described in detail with reference to FIG. 5.  FIG. 5 is a detailed diagram of the display unit 101i.  The display unit 101i has a display control unit DPC, a refresh memory RFM for storing display data delivered from the display region M3 in the RAM 101b as converted image information, a character generator CG for storing various characters and symbol patterns, an image memory IMM for successively storing images generated by the

- 14 -

character generator CG based on the image information until a full image to be displayed in one picture is stoed, and a driver DDV for displaying an image on a cathode-ray tube CRT based on the image information stored in the image memory IMM.  The character generator CG also stores symbols for displaying ladder diagrams in addition to a pattern of alphanumeric characters.  FIG. 6 shows examples of such symbols at (a) - (m).  For example, FIG. 6(a) indicates a normally open relay contact, and FIG. 6(b) a normally closed relay contact.  FIGS. 6(a) - FIG. 6(m) thus illustrate partial symbols of the ladder diagram.  FIG. 7 is an enlarged view of a ladder diagram as displayed on the cathode-ray tube CRT.

When a request signal for displaying the ladder diagram is entered through the MDI 101h in the NC apparatus 1, the CPU 101d transmits a ladder diagram display command through the input/output circuit 101e and the input/output circuit 202f in the PC apparatus 2 to the CPU 202e in the PC apparatus 2.  The CPU 202e then transfers the sequence program in the RAM 202a through the address data bus ·202g into the display region M3 in the RAM 101b in the NC apparatus 1.  Thereafter, the CPU 101d in the NC apparatus 1 successively delivers the sequence program data from the display region M3 in the RAM 101b to the display unit.  The display control unit DPC in the universal display unit 101i edits the delivered sequence program under the control of an edit program stored in the display control unit DPC to generate image information. For example, image information for image display sections is generated by dividing one line into a name display section, a symbol display section, and an address display section. The image information in the three display sections serves as image information for one line. In generating the image information for the name display section, a correspondence relationship stored in another memory, not shown, is employed. All image information generated by the display control unit DPC is stored in the refresh memory RFM.

Thereafter, the display control unit DPC successivey reads the image information out of the refresh memory RFM, reads patterns corresponding to the image information from the character generator CG, and stores them in the image memory IMM. The cathode-ray tube CRT now successively displays the ladder diagram according to the order in which the sequence program is stored.

The numerical control system of the present invention is thus capable of displaying the ladder diagram of the PC apparatus 2 by using the display function of the NC apparatus 1. Such a display can be achieved simply by allowing the PC apparatus 2 to write the sequence program directly into the display region Me in the RAM 101b in the NC apparatus 1. Therefore, the CPU 101d in the NC apparatus can display the ladder diagram in the normal procedure for display within the NC apparatus 1 without any concern about the display for the PC apparatus 2.

The numerical control system of the invention is also capable of displaying DI/DO conditions of the machine tool 3. More specifically, the signal conditions of the data input circuit DI and data output circuit DO in the data input/output unit 202c in the PC apparatus 2 are stored in the data memory 202b. By writing these signal conditions through the address data bus 202g into the display region M3 in the RAM 101b under the control of the CPU 202e, the conditions of DI/DO contacts in the machine tool 3 can be displayed on the display unit 101i in the NC apparatus 1 in the same manner as that in which the ladder diagram of the sequence program is displayed. In this display mode, the shape of a machine MC, the positions of contacts, a malfunctioning area AB can be displayed as shown in the display example of FIG. 8.

The foregoing control can easily be achieved by the sequence program or control program for the PC apparatus 2.

(2) Improvemnet of the processing function:

In conventional numerical control systems, when the NC apparatus 1 detects an alarm and notifies the PC apparatus 2 of the alarm, the PC apparatus 2 has interrupted the processing regardless of the alarm. However, some alarms require that the PC apparatus 2 forcibly stop the machine or otherwise act on the machine. According to the numerical control system of the invention, when an alarm signal is received by the PC apparatus from the NC apparatus 1 through the input/output circuits 101e, 202f, the CPU 202e in the PC apparatus 2 reads the content of a block being executed and a current position from the work areas in the RAM 101b in the NC apparatus 1 through the address data bus 202g, and decodes the content of the alarm based on the read-out data. Based on the decoded alarm content, the CPU 202e carries out the stoppage of oil supply to the machine tool 3 or other functions.

Therefore, the numerical control system of the present invention is capable of effecting control inherent in the machine on the side of the PC apparatus 2 at the time NC apparatus 1 generates an alarm.

Likewise, the RAM 101b of the NC apparatus 1 stores the load condtions of the servemotor and the spindle motor as detected by the NC apparatus 1, and the CPU 202e in the PC 2 can control the machine in various modes dependent on the load conditions by reading out the stored load conditions.

Furthermore, the CPU 202e in the PC apparatus 2 can rewrite parameters (offset intervals) of the machine

- 18 -

control program stroed in the program region M1 in the RAM 101b of the NC apparatus 1 through the address data bus 202g to meet machine features. Similarly, the CPU 2023 in the PC apparatus 2 can rewrite the names of stored tools and tools on the table in a tool storage program in the machine control program, so that various tools can be employed.

The above control modes can easily be accomplished all by the CPU 202e in the PC apparatus 2, that is, the sequence program and the control program.

Although the present invention has been described with reference to an embodiment thereof, the present invention is not limited to the above embodiment, but variouis changes and modifications may be made therein without departing from the scope of the appended claims.

### Industrial Applicability

A numerical control system according to the present invention allows a programmable controller to change control data based on basic specifications of a numerical control apparatus for improving functions to meet a machine to be controlled. Therefore, a machine maker or a user can easily improve the functions to meet the machine. Since a maker of numerical control apparatus may only be required to supply numerical control apparatus having the same specifications, the present invention contributes to a reduction in the cost of the numerical control apparatus.

CLAIMS

1. A numerical control system having a programmable controller, comprising a numerical control apparatus having at least a processor and a memory for numerically controlling a machine based on a machining program, a programmable controller having at least a processor and a memory for effecting sequence control of said machine according to control signals from said numerical control apparatus, and means connecting the memory of said numerical control apparatus to a data bus of said programmable controller, said memory of the numerical control apparatus being accessible by said programmable controller.

2. A numerical control system according to claim 1, wherein data stored in said memory of the numerical control apparatus is read by said processor of the programmable controller.

3. A numerical control system according to claim 1, wherein data is written by said processor of the programmable controller into said memory of the numerical control apparatus.

Fig. 1

0137852

0137852

# Fig. 2  Fig. 3

| | COMMAND CODE | ADDRESS |
|---|---|---|
| a | RD | 10.0 |
| b | AND | 200.1 |
| c | OR NOT | 200.2 |
| d | WRT | 210.1 |

# Fig. 5

1011

UNIVERSAL DISPLAY UNIT

# Fig. 4

0137852

# Fig. 6

(a) (b) (c) (d) (e) (f) (g)

(h) (i) (j) (k) (ℓ) (m)

# Fig. 7

NAME DISPLAY SECTION | MF | M28 | | M03 |
SYMBOL DISPLAY SECTION | ┤├ | ┤╱├ | | ◯ |
ADDRESS DISPLAY SECTION | 66.1 | 67.8 | | 10.2 |

# Fig. 8

AB

X

MC

# INTERNATIONAL SEARCH REPORT

International Application No. PCT/JP84/00048

**I. CLASSIFICATION OF SUBJECT MATTER** (if several classification symbols apply, indicate all) [3]

According to International Patent Classification (IPC) or to both National Classification and IPC

Int. Cl[3]  G05B 19/02

**II. FIELDS SEARCHED**

| Minimum Documentation Searched [4] | |
|---|---|
| Classification System | Classification Symbols |
| IPC | G05B 19/00 – 19/42 |

| Documentation Searched other than Minimum Documentation to the Extent that such Documents are Included in the Fields Searched [5] | |
|---|---|
| | Jitsuyo Shinan Koho 1932 – 1982<br>Kokai Jitsuyo Shinan Koho 1971 – 1982 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | JP, A, 53-16176 (Toshiba Corp.),<br>14, February, 1978 (14. 02. 78),<br>P.4, right column, lines 5 to 12,<br>lines 24 to 37, Fig. 1 | 1 – 3 |
| A | JP, A, 56-42804 (Shinco Electric Co., Ltd.),<br>21, April, 1981 (21. 04. 81) | 1 – 3 |
| A | JP, A, 52-127135 (Cincinnati Milacron Inc.),<br>25, October, 1977 (25. 10. 77)<br>Fig. 1 & DE, A1, 2715497 & US, A, 4058711<br>& GB, A, 1580988 | 1 – 3 |

\* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| May 14, 1984   (14. 03. 84) | May 21, 1984   (21. 05. 84) |
| International Searching Authority [1] | Signature of Authorized Officer [20] |
| Japanese Patent Office | |

Form PCT/ISA/210 (second sheet) (October 1981)